# EUROPEAN PATENT APPLICATION

(11) **EP 1 645 937 A2**
(43) Date of publication of application: **12.04.2006**
(21) Application number: 05021640.7
(22) Date of filing: 04.10.2005
(51) Int. Cl.: G06F 1/16, H04M 1/02

(54) **Hinge unit and mobile terminal having the hinge unit**

(30) Priority: 08.10.2004 KR 2004080566
(71) Applicant: LG Electronics Inc., Yongdungpo-gu Seoul (KR)
(72) Inventor: Lee, Choong-Jae, Euiwang Gyeonggi-do (KR)
(74) Representative: von Hellfeld, Axel

(57) **Abstract**

A mobile terminal includes a second body, a first body rotatably connected with the second body, a hinge connection part rotatably connecting the second body and the first body, and a hinge unit mounted at the hinge connection part and controlling torque applied to the first body when the first body is opened and closed. A user can control force required for opening and closing the first body as necessary, enhancing users' convenience for using the mobile terminal.

## Description

### BACKGROUND OF THE INVENTION

### 1. Field of the Invention

The present invention relates to a mobile terminal and, more particularly, to a hinge unit capable of suitably adjusting force required for a user to open and close a mobile phone body as necessary, and a mobile terminal having the hinge unit.

### 2. Description of the Related Art

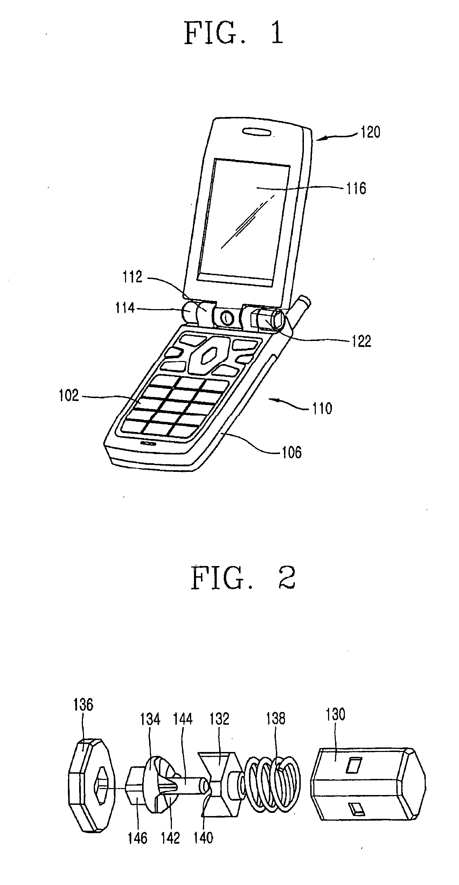

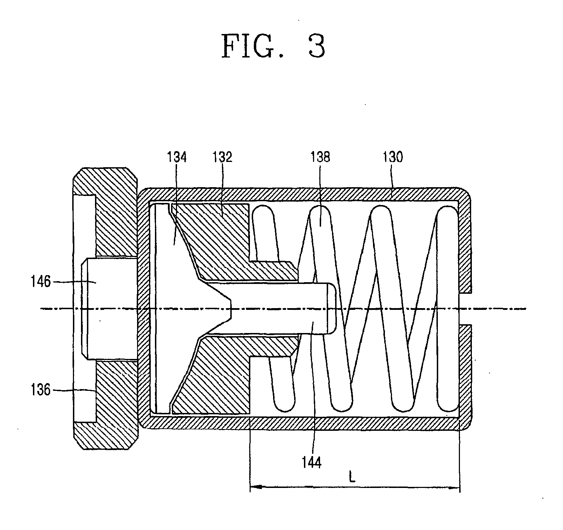

Figure 1 is a perspective view of a mobile terminal in accordance with a related art, Figure 2 is an exploded perspective view of a hinge unit of the mobile terminal in accordance with the related art, and Figure 3 is a sectional view of the hinge unit in accordance with the related art.

The related art mobile terminal includes: a second body 110 having various circuit components therein, a key pad 102 formed at its front surface to allow a user to input information, and a battery 106 mounted at its rear surface; a first body 120 rotatably connected with the second body 110 and having an LCD 116 for displaying information desired by a user; hinge connection parts 112 and 114 formed between the second body 110 and the first body 120 and rotatably connecting the second body 110 and the first body 120; and a hinge unit 122 installed in the hinge connection parts 112 and 114 and generating a torque when the first body 120 is opened and closed.

The hinge unit 122 includes a housing 130 fixed at the hinge connection part 114 of the first body 120 and having a space therein, a moving cam 132 mounted to be linearly moved in the housing 130; a fixed cam 134 disposed to contact with the moving cam 132; a head 136 having the fixed cam 134 mounted thereon and fixed to the hinge connection part 112; and a spring 138 disposed inside the housing 130 and applying certain elastic force to the moving cam 132.

The operation of the hinge unit of the related art mobile terminal will now be described.

When the first body 120 is rotated in an opened direction to open the first body 120, the housing 130 fixed at the hinge connection part 114 of the first body 120 and the head 136 fixed at the hinge connection part 112 of the second body 110 are relatively rotated.

Then, the fixed cam 134 fixed at the head 136 is rotatably moved, and accordingly, the fixed cam 134 is rotated along the moving cam 132, to thereby linearly move the moving cam 132. At this time, the spring 138 supported by the moving cam 132 is compressed to apply an elastic force to the moving cam 132 to generate torque when the first body 120 is opened and closed.

However, the related art mobile terminal has the following problem. That is, since the spring of the hinge unit has the uniform elastic force, it has the same torque. Thus, the user must use the same amount of force to open or close the first body, a problem arises in that the force applied for opening and closing the first body cannot be controlled in spite of a personal difference of the force.

### BRIEF DESCRIPTION OF THE INVENTION

Therefore, an object of the present invention is to provide a mobile terminal for allowing a user to control force for opening and closing a first body according to a condition of the user by controlling torque of a hinge unit.

To achieve these and other advantages and in accordance with the purpose of the present invention, as embodied and broadly described herein, there is provided a mobile terminal including: a second body; a first body rotatably connected with the second body; a hinge connection part rotatably connecting the second body and the first body; and a hinge unit mounted at the hinge connection part and controlling torque applied to the first body when the first body is opened and closed.

The hinge unit includes: a housing fixed at one of the first body and the second body and having a space therein; a moving cam mounted to be linearly moved in the housing; a fixed cam disposed to contact with the moving cam and rotatably disposed inside the housing; a head having the fixed cam mounted thereon and fixed to the other remaining one of the second body and the first body; a spring disposed inside the housing and applying elastic force to the moving cam; and a torque controller mounted inside the housing and controlling torque in opening and closing the first body by varying tensile force of a spring applied to the moving cam.

The torque controller includes: a support plate disposed to be movable inside the housing and supporting the spring; and a control bolt threaded with the support plate and linearly moving the support plate according to user's manipulation.

The hinge unit in accordance with the present invention includes a housing, a moving cam disposed to be linearly movable inside the housing, a fixed cam contacting with the moving cam and disposed to be rotatable inside the housing, a spring disposed inside the housing and providing an elastic force to the moving cam, and a torque controlling unit mounted inside the housing and controlling a torque by varying a tensile force of the spring.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a perspective view of the mobile terminal in accordance with related art;
Figure 2 is an exploded perspective view of a hinge unit of the mobile terminal in accordance with the related art;
Figure 3 is a sectional view of the hinge unit in accordance with the related art;
Figure 4 is a perspective view of a mobile terminal in accordance with the present invention;
Figure 5 is an exploded perspective view of the mobile terminal in accordance with the present invention;
Figure 6 is a sectional view of the hinge unit in accordance with the present invention;
Figure 7 is a perspective view of a control bolt of the hinge unit in accordance with the present invention; and
Figures 8 and 9 show operational state of the hinge unit in accordance with the present invention.

### DETAILED DESCRIPTION OF THE INVENTION

A mobile terminal in accordance with a preferred embodiment of the present invention will be described with reference to the accompanying drawings.

There can be several embodiments of the mobile terminal in accordance with the present invention, of which the most preferred one will be described.

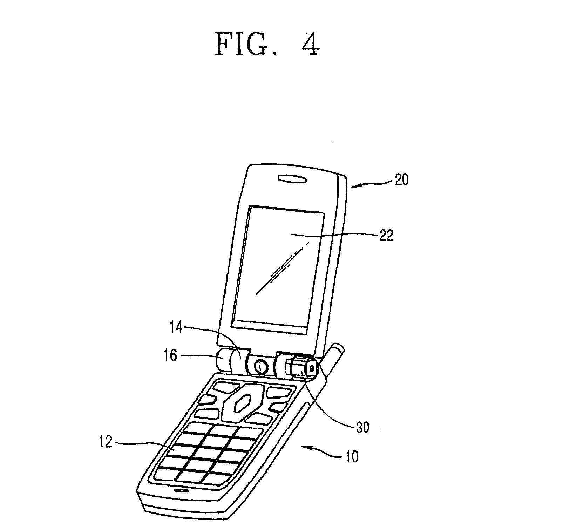

Figure 4 is a perspective view of a mobile terminal in accordance with the present invention.

The mobile terminal in accordance with the present invention includes: a second body 10 having a PCB with various circuit components mounted thereon and a key pad 102 formed at its front surface to allow a user to input information; a first body 20 rotatably connected with the second body 10 and having an LCD 22 for displaying information desired by a user; hinge connection parts 14 and 16 formed between the second body 10 and the first body 20 and rotatably connecting the second body 10 and the first body 20; and a hinge unit 30 installed at the hinge connection parts 14 and 16, generating a torque when the first body 20 is opened and closed, and allowing the user to control torque.

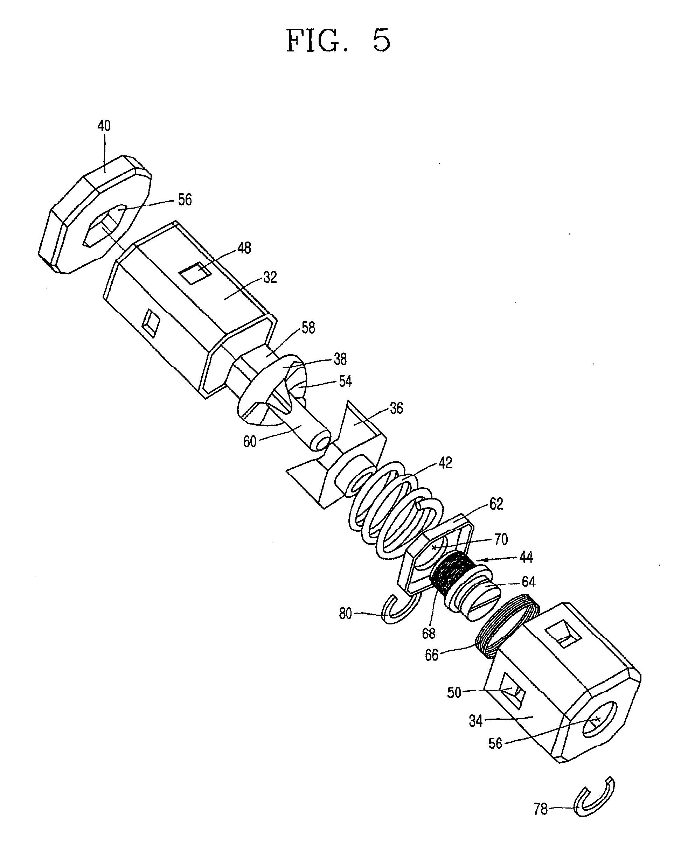

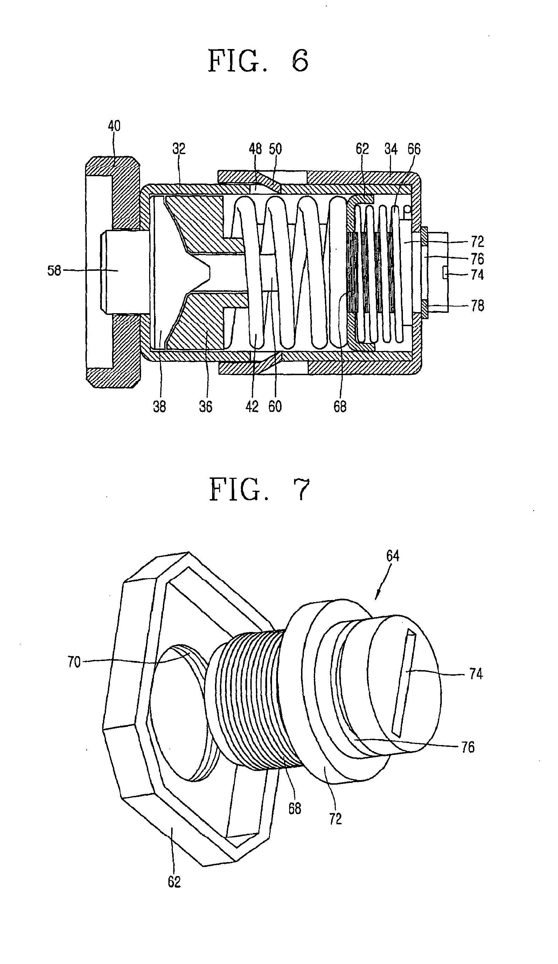

Figure 5 is an exploded perspective view of the mobile terminal in accordance with the present invention, and Figure 6 is a sectional view of the hinge unit in accordance with the present invention.

The hinge unit 30 includes: a housing 32 fixed at one of the hinge connection parts 14 and 16 of the first body 20 and the second body 10 and having a space therein, a moving cam 36 mounted to be linearly moved in the housing 32; a fixed cam 38 disposed to contact with the moving cam 36 and rotatably disposed inside the housing 32; a head 40 having the fixed cam 38 mounted thereon and fixed to the other remaining one of the hinge connection parts 14 and 16 of the second body 10 and the first body 20; a spring 42 disposed inside the housing 32 and applying elastic force to the moving cam 36; and a torque controller 44 mounted inside the housing 32 and controlling torque in opening and closing the first body 20 by varying tensile force of a spring 42 applied to the moving cam 36.

The housing 32 is formed in a polygonal shape with both sides thereof opened, and a cover 34 is inserted to one side thereof. The cover 34 is fixedly inserted at an outer circumferential surface of the housing 32 and has a through hole 56 through which the torque controller 44 is exposed.

The housing 32 includes a plurality of stopping holes 48 in a circumferential direction, and stopping hooks 50 are formed in the circumferential direction and bent in an inward direction and caught by the stopping holes 48. Namely, when the cover 34 is inserted at the outer circumferential surface of the housing 32, the stopping hooks 50 of the cover 34 are caught at the stopping holes 48 of the housing 32, thereby locking the housing 32 and the cover 34.

Herein, when the housing 32 is fixed at the hinge connection part 16 of the first body 20, the head 40 is fixed to the hinge connection part 14 of the second body 10, and when the housing 32 is fixed at the hinge connection unit 14 of the second body 10, the head 40 is fixed to the hinge connection part 16.

The moving cam 36 is disposed to be linearly moved inside the housing 32 and its outer circumference is formed in the same polygonal shape as the housing 32 so that the moving cam 36 cannot be rotated. A first cam face 52 is formed at one side of the moving cam 36 and the other side of the moving cam 36 supports one end portion of the spring 42.

The fixed cam 38 has a circular outer circumference so as to be rotatably disposed inside the housing 32. A second cam face 54 is formed at one side thereof and contacts with a first cam face 52 of the moving cam 36, and a fixing part 58 to be inserted into a fixing hole 56 formed at the head 40 is formed at the other side of the fixed cam 38.

A cam shaft 60 is formed in a longitudinal direction at the fixed cam 38, and the moving cam 36 is inserted to be linearly movable into the cam shaft 60 go guide linear movement of the moving cam 36.

The torque controller 44 includes a support plate 62 having the same polygonal outer circumference as an inner circumference of the housing 32 so as to be linearly moved into the inner circumference of the housing 32, the other side of the spring 42 being supported by one side of the support plate 62, a control bolt 64 threaded with the support plate 62 in order to linearly move the support plate 62, and disposed such that one end portion of the control bolt is exposed through the through hole 56 formed at the cover 34; and a support spring 66 installed between inner wall faces of the support plate 62 and the housing 32 and preventing the support plate 62 from being inclined when being moved.

The outer circumference of the support plate 62 is formed as a plate type in a polygonal shape, and a female screw 70 into which a male screw 68 of the control bolt 64 is threaded is formed at the center of the support plate 62. One side of the support plate 62 supports spring 42 and the other side supports the support spring 66, so that when the control bolt 64 is rotated, it is linearly moved inside the housing 32 to control tensile force of the spring 42.

As shown in Figure 7, the male screw 68 to be threaded with the female screw 70 of the control bolt 64 is formed at one circumferential surface of the control bolt 64, and a tool insertion hole 74 is formed at the other end portion, into which a tool for rotating the control bolt 64 is inserted.

The control bolt 64 is rotatably mounted at the through hole of the cover and its linear movement is prevented. Namely, a support 72 is formed at one side of the control bolt 64 and extended in an outward direction so as to be supported at an inner side of the cover 34, and a groove 76 is formed in a circumferential direction at a portion positioned at an outer surface of the cover 34, in which a snap ring 78 is mounted.

Supported by the support 72 and the snap ring 78 at an inner side and at an outer side of the cover 34, the control bolt 64 can make a rotational movement but not a linear movement.

The snap ring 80 is mounted at the end portion of the control bolt 64 in order to prevent the control bolt 64 from being released fro the support plate 62.

One end of the support spring 66 is supported by the support plate 62 and the other end thereof is supported by the inner circumference of the cover 34, allowing certain elastic force to the support plate 62 to thereby prevent inclination or distortion of the support plate 62 when the support plate 62 is linearly moved.

The operation of the mobile terminal constructed as described above will be explained as follows.

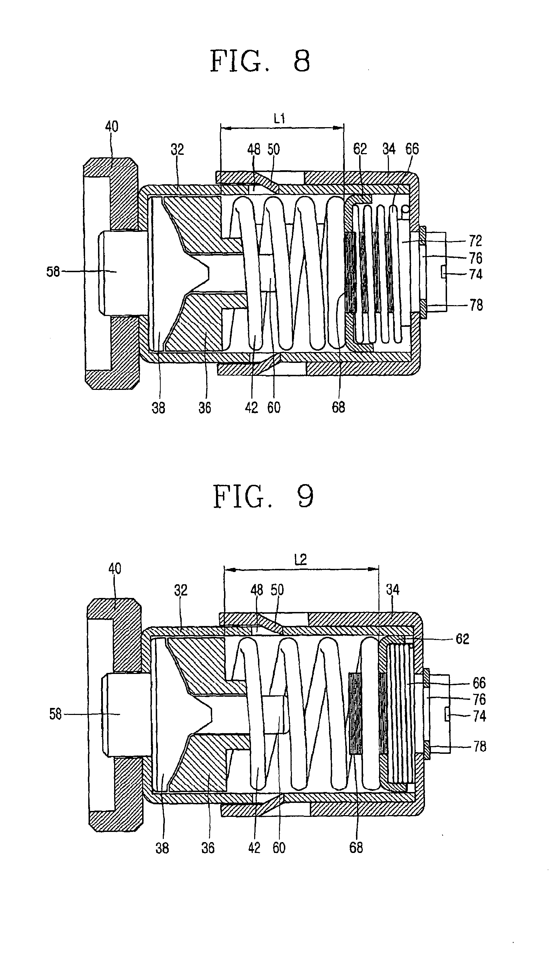

Figures 8 and 9 show operational state of the hinge unit in accordance with the present invention.

When a user rotates the control bolt 64 clockwise by using a tool, the support plate 62 threaded with the control bolt 64 is linearly moved in a forward direction, shortening the length (L1) of a free field of the spring 42. Accordingly, a tensile force of the spring 42 increases. The support plate 62 is supported by the support spring 66 so that the support plate 62 cannot be inclined or distorted when being linearly moved.

Conversely, if the user rotates the control bolt 64 counterclockwise, the support plate 62 threaded with the control bolt 64 is linearly moved in a backward direction. Then, a length (L2) of the free field of the spring 42 is lengthened and the tensile force of the spring 42 is reduced.

In this manner, the user can vary the tensile force of the spring 42 by controlling the length of the free field of the spring 42 by rotating the control bolt 64 clockwise or counterclockwise. And accordingly, force working between the first can face 52 of the moving cam 36 and the second cam face 54 of the fixed cam 38 differs, so that the user can control force applied for opening and closing the first body 20.

As so far described, the mobile terminal in accordance with the present invention has the following advantage.

That is, for example, by installing the torque controller at the hinge unit, the user can control force for opening and closing the first body by directly controlling torque of the hinge unit. Thus, the user can conveniently use the mobile phone.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A mobile terminal comprising:
a first body;
a second body rotatably connected with the first body;
a hinge connection part rotatably connecting the first body and the second body; and
a hinge unit mounted at the hinge connection part and controlling torque applied to the second body when the second body is opened and closed.

2. The mobile terminal of claim 1, wherein the hinge unit comprises:
a housing fixed at one of the first body and the second body and having a space therein;
a moving cam mounted to be linearly moved in the housing;
a fixed cam disposed to contact with the moving cam and rotatably disposed inside the housing;
a head having the fixed cam mounted thereon and fixed to the other remaining one of the second body and the first body;
a spring disposed inside the housing and applying elastic force to the moving cam; and
a torque controller mounted inside the housing and controlling torque in opening and closing the first body by varying tensile force of a spring applied to the moving cam.

3. The mobile terminal of claim 2, wherein the housing has a polygonal form with both sides thereof opened, and a cover having a through hole through which the torque controller is exposed is mounted at one side of the housing.

4. The mobile terminal of claim 3, wherein stopping holes are formed at the housing, and stopping hooks to be caught in the stopping holes are formed at the cover.

5. The mobile terminal of claim 2, wherein the torque controller comprises:
a support plate disposed to be linearly moved inside the housing and
supporting the spring; and
a control bolt mounted at the support plate and linearly moving the support plate according to user's operation.

6. The mobile terminal of claim 5, wherein the outer circumference of the support plate has the same polygonal shape as the inner circumference of the housing.

7. The mobile terminal of claim 5,k wherein the support plate has a female screw to be threaded with a male screw of the control bolt.

8. The mobile terminal of claim 5, further comprising:
a support spring disposed between inner surfaces of the support plate and the housing and providing elastic force to the support plate.

9. The mobile terminal of claim 5, wherein the control bolt includes the male screw threaded with the female screw formed at the support plate at one side thereof, and the other side of the control bolt is exposed outside the cover.

10. The mobile terminal of claim 9, wherein the control bolt includes a tool insertion hole at the portion exposed outside the cover, into which a tool is inserted.

11. The mobile terminal of claim 9, wherein the control bolt is mounted to the cover such that it can make a rotational movement and cannot make a linear movement.

12. The mobile terminal of claim 11, wherein a support is formed at the outer circumference of the control bolt and contacts with an inner surface of the cover, and a snap ring is mounted at an exposed portion of the cover.

13. The mobile terminal of claim 9, wherein a snap ring is mounted at an end portion of the control bolt in order to prevent the control bolt from being released from the support plate.

14. A hinge unit comprising:
a housing;
a moving cam disposed to be linearly movable inside the housing;
a fixed cam contacting with the moving cam and disposed to be rotatable inside the housing;
a spring disposed inside the housing and providing an elastic force to the moving cam; and
a torque controlling unit mounted inside the housing and controlling a torque by varying a tensile force of the spring.

15. The hinge unit of claim 14, wherein the housing has a polygonal form with both sides thereof opened, and a cover having a through hole through which the torque controller is exposed is mounted at one side of the housing.

16. The hinge unit of claim 15, wherein stopping holes are formed at the housing, and stopping hooks to be caught in the stopping holes are formed at the cover.

17. The hinge unit of claim 15, wherein the torque controller comprises:
a support plate disposed to be linearly moved inside the housing and
supporting the spring; and
a control bolt mounted at the support plate and linearly moving the support plate according to user's operation.

18. The hinge unit of claim 17, wherein the outer circumference of the support plate has the same polygonal shape as the inner circumference of the housing.

19. The hinge unit of claim 17, wherein the support plate has a female screw to be threaded with a male screw of the control bolt.

20. The hinge unit of claim 17, further comprising:
a support spring disposed between inner surfaces of the support plate and the housing and providing elastic force to the support plate.

21. The hinge unit of claim 17, wherein the control bolt includes the male screw threaded with the female screw formed at the support plate at one side thereof, and the other side of the control bolt is exposed outside the cover.

22. The hinge unit of claim 21, wherein the control bolt includes a tool insertion hole at the portion exposed outside the cover, into which a tool is inserted.

23. The hinge unit of claim 21, wherein the control bolt is mounted to the cover such that it can make a rotational movement and cannot make a linear movement.

24. The hinge unit of claim 23, wherein a support is formed at the outer circumference of the control bolt and contacts with an inner surface of the cover, and a snap ring is mounted at an exposed portion of the cover.

25. The hinge unit of claim 21, wherein a snap ring is mounted at an end portion of the control bolt in order to prevent the control bolt from being released from the support plate.
